Europäisches Patentamt

European Patent Office

Office européen des brevets

(11) Veröffentlichungsnummer: **0 092 180**
**B1**

(12) **EUROPÄISCHE PATENTSCHRIFT**

(45) Veröffentlichungstag der Patentschrift: **18.02.87**

(51) Int. Cl.⁴: **G 06 K 7/10**

(21) Anmeldenummer: **83103621.5**

(22) Anmeldetag: **14.04.83**

(54) **Datenerfassungsgerät.**

(30) Priorität: **17.04.82 DE 3214215**

(43) Veröffentlichungstag der Anmeldung:
**26.10.83 Patentblatt 83/43**

(45) Bekanntmachung des Hinweises auf die
Patenterteilung:
**18.02.87 Patentblatt 87/08**

(84) Benannte Vertragsstaaten:
**AT BE CH DE FR IT LI NL**

(56) Entgegenhaltungen:
**US-A-3 925 814**
**US-A-4 044 393**

(73) Patentinhaber: **Diplom-Volkswirt Josef Lauer
Nachfolger
Gebhardtstrasse 45
D-8510 Fürth/Bay. (DE)**

(72) Erfinder: **Langenbach, Karlheinz
In der Berten 86
D-8510 Fürth/Bay. (DE)**
Erfinder: **Bauer, Paul
Etzstrasse 37
D-8300 Ergolding (DE)**

(74) Vertreter: **Rau, Manfred, Dr. Dipl.-Ing. et al
Rau & Schneck, Patentanwälte Königstrasse 2
D-8500 Nürnberg 1 (DE)**

Courier Press, Leamington Spa, England.

**Beschreibung**

Die Erfindung richtet sich auf ein Datenerfassungssystem nach dem Oberbegriff von Anspruch 1.

Derartige Datenerfassungssysteme dienen dazu, um auf rationelle Weise eine Datenerfassung über den Warenbestand durchführen zu können, Hierbei werden zur sogenannten Regalauszeichnung Waren oder Warengruppen Lochkarten, Karten mit Strichcode oder mit Magnetcode zugeordnet.

Im Apothkenbereich ist eine Lochkarte im Fahrkartenformat, ABDA-Lochkarte genannt, eingeführt worden, die in Trägereinrichtungen seitlich auf Arzneimittelschubladen aufgesteckt wird. Jede Karte weist dabei eine Artikelnummer des in der Schublade befindlichen zugeordneten Medikaments auf, wobei in der Regel zwei gleiche, aber verschiedenfarbige Karten in der Trägereinrichtung hintereinander stecken. Mit der ersten Karte werden z.B. über sogenannte Magazin-Leser Nachbestellungen mittels Datenfernübertragung durchgeführt, während die jeweils zweite, andersfarbige Karte in der Trägereinrichtung verbleibt, um nach Ausführung der Bestellung das richtige Wiedereinsortieren der Datenkarten zu ermöglichen.

Aus dem deutschen Patent 25 1o 475 ist es bekannt, ein Daten-Erfassungsgerät so auszugestalten, daß es mit Hilfe der für die Nachbestellung ohnehin vorhandenen Datenkarten möglich ist, Inventuren problemlos durchzuführen. Das bekannte Datenerfassungsgerät ist so ausgestaltet, daß sein einen Lesekopf für die Karten aufweisender Geräteteil in den Bereich der einzelnen Schubladen gebracht werden kann, wobei dann von Hand die Datenkarten aus der Trägereinrichtung genommen und in einen Schacht des Datenerfassungsgerätes eingeführt werden. Nach erfolgter Datenerfassung werden die Karten wieder manuell aus dem Schact entnommen und in ihre Trägereinrichtung zurückgegeben.

Durch eine darartige Vorrichtung wird insoweit ein beträchtlicher Vorteil erzielt, als es nicht mehr erforderlich ist, die einzelnen oft komplizierten Spezialitätenbezeichnungen handschriftlich aufzunehmen oder diktiert weiterzugeben, so daß vor allem auch die Möglichkeit von Fehlübertragungen ausgeschlossen wird. Allerdings wird bei diesen bekannten Geräten zwar der eingentliche Datenerfassungsvorgang sehr schnell durchgeführt, jedoch die Arbeitsgeschwindigkeit gegenüber einem optimal erzeilbaren Wert durch die Notwendigkeit des Herausnehmens der Karten der Trägereinrichtung und das anschließende Zurückstecken beschränkt.

Hiervon ausgehend liegt der Erfindung die Aufgabe zugrunde, ein Datenerfassungssystem nach dem Oberbegriff von Anspruch 1 so auszubilden, daß es eine besonders schnelle und bequeme Handhabung gestattet.

Diese Aufgabe wird gelöst durch ein Datenerfassungssystem mit den kennzeichnenden Merkmalen von Anspruch 1. Ein derartiges system mit einem auf die Trägereinrichtung der Karten aufsetzbaren Gerät macht das manuelle Herausnehmen der Karten entbehrlich, so daß der hierfür eforderliche Zeitaufwand auf die weitaus geringere Zeitdauer des Aufsetzens des Datenfassungsgerätes reduziert wird. Durch die erfindungsgemäß vorgesehene Transporteinrichtung wird die Karte en einem Lesekopf des Gerätes vorbeigeführt, so daß ihr Informationsinhalt vollständig erfaßt werden kann, wobei die Transporteinrichtung gleichzietig die Herausnahme der Datenkarte aus einem gegen Staub, Schmutz und dergl. geschützten Bereich der Trägereinrichtung und die Zurückführung ermöglicht. Damit wird nicht nur eine besonders schnelle, sondern auch eine sehr präzise Ablesung möglich, da die Datenkarten dann, wenn sie nicht gelesen werden, gegen Oberflächenbeschädigungen geschützt aufbewahrt werden können.

Mit dem erfindungsgemäßen system wird also ein sehr schnelles Ablesen einer Vielzahl von Datenkarten ermöglicht, was insbesondere bei der Durchführung einer Inventur in Apotheken ein ganz erheblicher Vorteil ist. Selbstversändlich ist ein erfindungsgemäß ausgestaltetes Datenfassungsgerät mit großem Vorteil auch in anderen Einsatzbereichen anwendbar.

Durch die nach Anspruch 2 vorgesehene Federbeaufschalgung des Reibrades werden einerseits gewisse Formunterschiede der Trägereinrichtungen ausgeglichen, zum anderen wird auch dann ein sicherer Transport gewährleistet, wenn das Reibrad bereits gewisse Abriebserscheinungen aufweist.

Durch die gemäß Anspruch 3 vorgesehene Ausgestaltung mit zwei Paaren von Reibrädern oberhalb und unterhalb des Lesekopfes und je einem getrennt ansteuerbaren Elektromotor ist es möglich, eine Datenkarte aus der Trägereinrichtung vollständig herauszuführen und nach dem Abtastvorgang wieder zurückzuführen, wobei insbesondere die Elektromotoren so gesteuert werden können, daß bei zuverlässiger Ablesung die Zeit hierfür optimiert wird.

Die schwenkbare Lagerung der Reibradpaare gemäß Anspruch 4 in Verbindung mit der Federbeaufschalagung in Richtung auf die Karte hin stellt in jeder Transportphase einen zuverlässigen Kontakt der Reibräder mit der eingezogenen Karte sicher. Dabei ist vorzugsweise vorgesehen, daß sich über die Schwenkaschsen nach hinten Hebelansätze erstrecken, wobei die Hebelansätze der beiden Reibradpaare durch eine Zugfeder verbunden sind. Hierdurch wird in Verbindung mit der exzentrischen Lagerung erreicht, daß auf klemmende Karten eine besonders hohe Friktion in die jeweilige gewünschte Transportrichtung ausgeübt wird.

Die Ausgestaltung gemäß Anspruch 5 stellt sicher, daß auch in sich gewellte Karten oder Karten, welche ggf. mit mehreren Lagen von Aufklebern versehen und deshalb uneben sind, von jedem Reibrad eines Reibradpaares erfaßt und deshalb ohne zu klemmen gerade im Kartenschacht transportiert werden.

Zum Auslösen des Ablesevorgangs dient der Mikroschalter gemäß Anspruch 6. Dieser Mikroschalter wird dann und nur dann betätigt, wenn das Datenerfassungsgerät ordungsgemäß auf den Kartenhalter aufgesetzt ist. Wird das Gerät während des Ablesevorgangs von der Bedienungsperson verkantet, wird der Kontakt des Mikroschalters geöffnet und der Ablesevorgang erforderlichenfalls unterbrochen.

Bei der Verwendung von Magnetkarten als Datenkarten kann der Lesekopf entsprechend Anspruch 7 als Magnetlesekopft ausgebildet werden.

Als besonders günstig erweist es sich, wenn der Lesekopf entsprechend Anspruch 8 eine Relfexions-Abtaseinrichtung aufweist. Hierdurch wird der Forderung Rechnung getragen, daß die Oberfläche der Datenkarten abgetestet werden kann, was der Bedingung entspricht, daß die Datenkarten zum Ablesen nicht manuell aus der Trägereinrichtung genommen werden müssen. Insebesondere ist es möglich, die im Apothekenbereich verwendeten Lochkarten zu lesen. Die Signalbildung kann dabei entweder so erfolgen, daß die Leseeinrichtung eine die Kartenoberfläche scharf abbildende Optik umfaßt, so daß das Vorhandensein eines Loches eine verminderte Reflexion und damit die Information "dunkel" und das Vorliegen der Kartenoberfläche die Information "hell" liefert, oder aber indem auf eine scharf abbildende Optik verzichtet und die dem Lesekopf gegenuberliegende Wand des Kartenschachtes mit einem Spiegel versehen wird. Bei dieser Ausgestaltung wird Reflexion und dementsprechend das Signal "hell" dann erhalten, wenn sich im jeweiligen Strahlengang ein Loch befindet. Die letztere Ausgestaltung weist den Vorteil auf, daß dunkle Aufdrucke auf der Datenkarte, z. B. gelegentlich verwendete Werbeaufdrucke, die Ablesung nicht verfälschen können.

Gemäß Anspruch 9 ist es möglich, die Vorderwand des Kartenschachtes an verschiedene Aus-gestaltungen von Datenkarten -Trägern anzupas-sen, wobei dann jeweils ein sicheres Aufsetzen des Erfassungsgerätes gewährliestet ist.

Die Maßnahme nach Anspruch 10 ermögliche es, ein und dasselbe Datenerfassungsgerät so-wohl zur automatischen Karteneinlesung haran-zuziehen als auch mit diesem Gerät eine Einlesung von Hand vorzunehmen.

Weitere Merkmale, Vorteile und Einzelheiten der Erfindung ergeben sich aus der folgenden Beschreibung zweier bevorzugter Ausführungsformen anhand der Zeichnung. Dabei zeigen

Fig. 1 eine perspektivische Ansicht eines erfindungsgemäßen Datenerfassungssystems zusammen mit Datenkarten aufnehmenden Trägereinrichtungen,

Fig. 2 einen Längsschnitt durch ein Datenerfassungsgerät und eine Datnträger-einrichtung entsprechend der Darstellung in Fig. 1,

Fig. 3 eine Aufsicht auf den Bereich des Lesekopfes des Datenerfassungsgerätes,

Fig. 4 eine vergroßerte schematische Darstellung von Transporteinrichtung und Lesekopf im auf die Datenkarte aufgesetzten Zustand,

Fig. 5 eine Aufsicht einer Datenkarte,

Fig. 6 eine schematische Darstellung der elek-tronischen Schaltanordnung des Daten-fassungsgerätes,

Fig. 7 einen Schnitt durch eine zweite bevorzug-te Ausführungsform eines Datenerfassungs-gerätes,

Fig. 8 eine Ansicht gemäß dem Sichtpfeil VIII in Fig. 7 auf das teilweise aufgebrochen dargestellte Datenerfassungsgerät und

Fig. 9 eine Aufsicht auf die Ausführungsform nach Fig. 7 und 8.

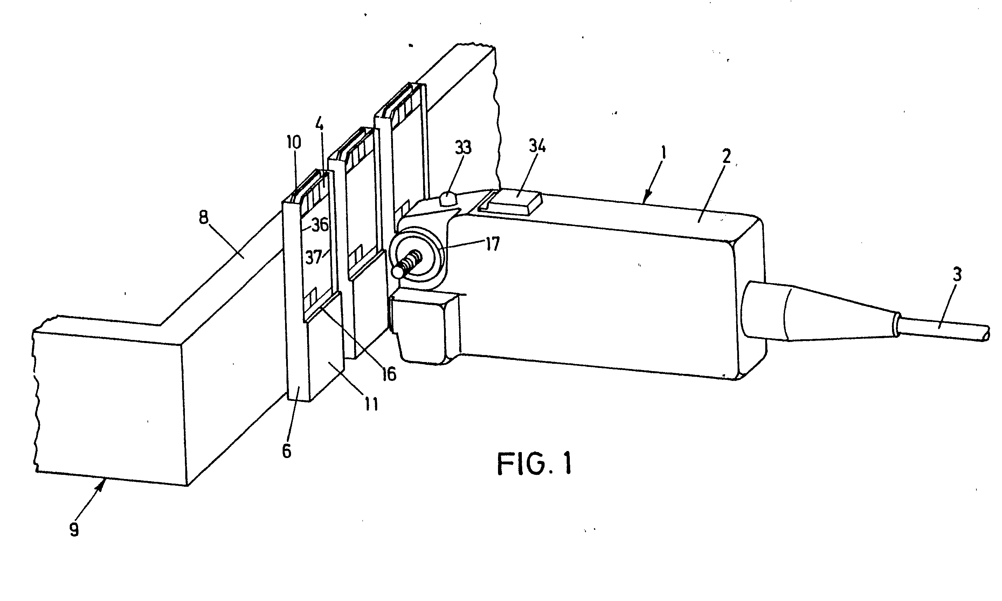

Eine in Fig. 1 dargestellte Ausführungsform eines Datenerfassungsgeräts 1 weist ein Gehäuse 2 auf und ist über ein Ansclußkabel 3 mit einer Datenerfassungs- und/oder Datenverarbeitungsanlage verbunden.

Die durch das Datenerfassungsgerät 1 abzulesenden Daten sind auf Datenkarten 4 in Form von Lochungen 5 gespeichert. Die Datenkarten 4 sind in Trägereinrichtungen 6 eingeschoben, welche mit Halteklammern 7 an der Seitenwand 8 einer Regalschublade 9 befestigt sind. Jede Trägereinrichtung 6 weist in hintereinanderliegenden Führungsschlitzen gelagert eine vornliegende Datenkarte 4 und eine Zweite dahingerliegende Datenkarte 10 von anderer Farbe auf. Die jeweils hinten angeordneten Datenkarten 10 verbleiben in der Trägereinrichtung 6, wenn die jeweils vorne angeordneten Datenkarten 4 zur Durchführung von Bestellungen aus der Trägereinrichtung 6 genommen werden, und ermöglichen so das korrekte Wiedereinordnen der Datenkarten 4 nach deren Gebrauch. Die Datenkarten 4 und 10 weisen etwa Fahrkartenformat auf. Solche im Apothkenbereich verwendeten Karten werden als ABDA-Lochkarten bezeichnet.

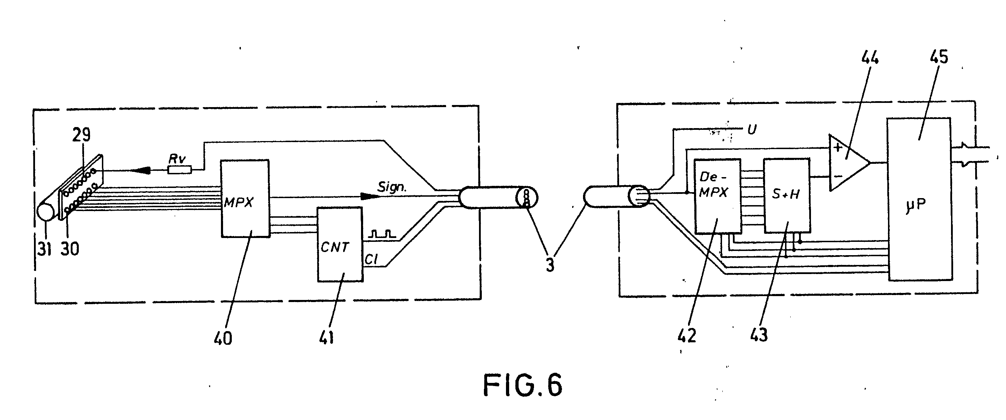

Wie insbesondere aus Fig. 5 ersichtlich, weisen die Datenkarten 4 einen unteren Abschnitt mit Lochungen 5 auf, während die obere Hälfte für unmittelbar abzulesende Aufdrucke freigehalten ist. Der Bereich der Lochungen 5 wird bei in Trägereinrichtung 6 eingesetzter Datenkarte 4 durch eine Querwand 11 der Trägereinrichtung 6 abgedeckt und ist so vor Beschädigungen und Verschmitzung geschützt.

Das Gehäuse 2 des Datenerfassungsgerätes 1 ist im Bereich des Lesekopfes 12 so ausgebildet, daß durch die beiden senkrechten Gehäusekanten 13 und 14 und die waagerechte Gehäusekante 15 drei Seiten eines rechteckigen Vorsprungs gebildet werden, welcher in seinen Außenabmessungen mit der durch die Querkante 16 und die Seitenleisten 36 und 37 gebildeten Ausnehmung der Trägereinrichtung 6 korrespondiert. Das Gehäuse 2 des Datenerfassungsgerätes 1 kann dementsprechend definiert auf die Trägereinrichtung 6 zum Ablesen aufgesetzt werden, wobei sowohl die Höhenposition als auch die Seitenposition festgelegt und die Ausrichtung zwischen Gehäuse 2 und Trägereinrichtung 6 gewährleistet ist.

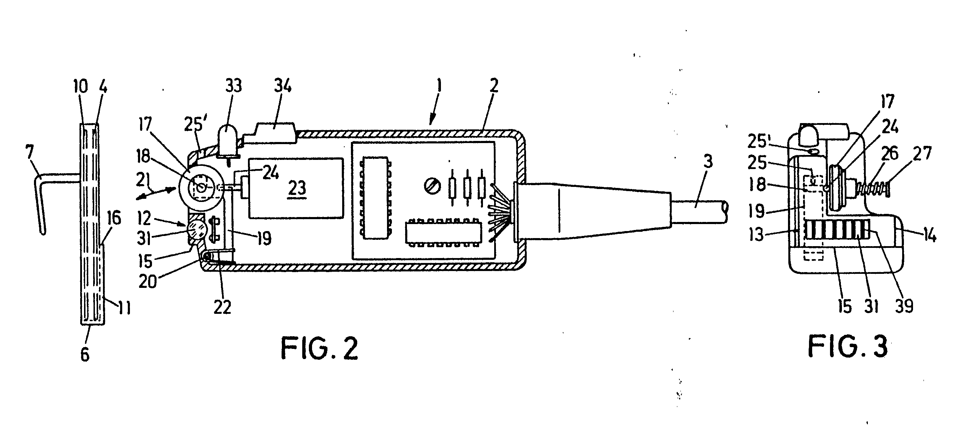

Im Gehäuse 2 ist oberhalb Lesekopfes 12 als Transporteinrichtung ein Reibrad 17 angeordnet, welches über die Vorderseite des Gehäuses 2 hinaussteht. Das Reibrad 17 ist auf einer Starrachse 18 gelagert, welche durch einen Hebelarm 19 getragen wird, welcher um eine Achse 20 um einen gewissen Winkelbereich, wie in Fig. 2, durch den Pfeil 21 angedeutet, schwenkbar ist. Durch eine Schraubenfeder 22, welche am Hebelarm 19 angreift, wird dieser vom Gehäuse weg nach außen gedrückt. Der Federanschlag ist dabei so ausgelegt, daß beim Aufsetzen des Gehäuses 2 auf die Trägereinrichtung 6 das Reibrad 17 zur federnden Anlage an die Datenkarte 4 gelangt, wodurch einerseits ein guter Reibschluß und dammit ein sicherer Transport der Datenkarte 4 gewährleistet ist, und andererseits ein bei längerer Betriebsdauer sich einstellender Abrieb des Reibrades 17 ausgeglichen werden kann. Bei zu starker Abnutzung des Reibrades 17 ist es möglich, dieses durch Lösen der Inbusschraube 25 einfach auzutauschen. Im Gehäuse 2 ist eine Ausnehmung 25' vorgesehen, um die Inbussschraube 25 zugänglich zu machen.

Der Antrieb des Reibrades 17 erfolgt über einen Gleichstrommotor 23, dessen Antrieblswelle 24 reibschlüssig seitlich am Reibrad 17 angreift. Zur Sicherstellung und Aufrechterhaltung eines hinrichtenden Reibschlusses ist auf der Achse 18 eine Schaubenfeder 26 angeordnet, welche sich an einem Anschlag 27 abstützt und geben das Reibrad 17 und damit dieses gegen die Antriebswelle 24 drückt.

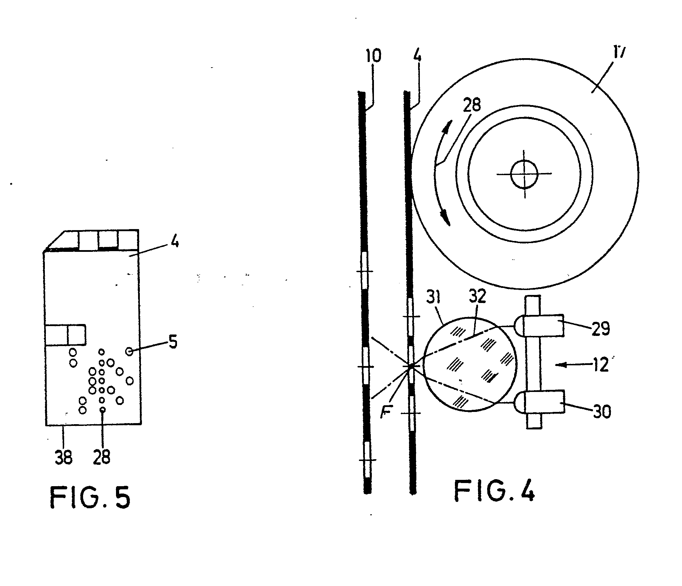

Der Gleichstrommotor 23 ist so geschaltet, daß er das Reibrad 17, wie durch den Pfeil 28 in Fig. 4 angedeutet, vorwärts und rückwärts um jeweils eine solche Strecke bewegen kann, daß eine Datenkarte 4 soweit in ihrer Schlitzführung in der Trägereinrichtung 6 nach oben bewegt werden kann, daß deren unterste Lochreihe 28 im obersten ausgefahrenen Zustand oberhalb der Querkante 16 der Querwand 11 der Trägereinrichtung 6 liegt und abgelesen werden kann, während die Rückbewegung durch den Anschlag 38 der Datenkarte 4 am Boden der Trägereinrichtung 6 begrenzt wird. Grundsätzlich wäre es auch vorstellbar, daß durch das Reibrad 17 lediglich die Aufwärtsbewegung der Datenkarte 4 bewerkstelligt wird, während die Rückswärtsbewegung nach Entfernen des Datenerfassungsgerätes aufgrund der Schwerkraft selbsttätig erfolgt. Das zuerst beschriebene motorsche Aus- und Einfahren hat demgegenüber jedoch den Vorteil, daß sowohl beim Aus- als auch beim Einfahren eine Lesung durchgeführt werden kann, wobei es dann möglich ist, die bei jeder Lesung gewonnenen Daten zu Kontrollzwecken zu vergleichen.

Unterhalb des Reibrades 17 ist im Gehäuse 2 der Lesekopf 12 untergebracht. Dieser umfaßt eine Mehrzahl jeweils paarweise über- bzw. untereinander angeordneter IR-Leuchtdioden 29 bzw. IR-Fotodioden oder Fototransistoren 30. Im letztgenannten Fall dient die in Sperrichtung betriebene Kollektordiode gleichzeitig als Fotodiode. Es sind also jeweils in einer waagerechten Reihe Leuchtdioden 29 und Fotodioden 30 nebeneinander angeordnet. Vor den Leuchtdioden 29 bzw. Fotodioden 30 ist ein waagerechter Glasstab 31 so angeordnet, daß dessen Durchmesser etwa den Außenabstand der Reihen von Leuchtdioden 29 und Fotodioden 30 überbrückt (vgl. Fig. 4) und dessen Länge etwa der Länge der Diodenreihen entspricht. Die Brechung des Glasstabs 31 und seine Anordnung sind so konzipiert, daß ein von einer Leuchtdiode 29 ausgesandter Lichtstrahl 32 so gebrochen wird, daß er im Fall einer Reflexion in der Mittelebene der Datenkarte 4 genau in das Zentrum der darunterliegenden Fotodiode 30 fallen würde. Der Brennpunk F der durch den Glasstab 31 gebildeten Zylinderlinse liegt also in der Mittelebene der Datenkarte 4. Hierdurch wird ein optisches System mit geringer Tiefenschärfe geschaffen, durch welches sichergestellt wird, daß eine Reflexion an der hinter der Datenkarte 4 liegenden Datenkarte 10 bzw. an der Rückwand der Trägereinrichtung 6 in den Fotodioden 30 nicht zu einer ein Signal auslösenden Intensität führt.

An der Oberseite des Gehäuses 2 ist noch eine Leuchtdiode 33 vorgesehen, welche eine über die Auswerteelektronik erkannte Fehllesung liecht sichtbar anzeigt, so daß der Einlesevorgang wiederholt werden kann.

Eine ebenfalls an der Oberseite des Gehäuses 2 angebrachte Mengeneinabetaste 34 ermöglicht es bei entsprechender Programmierung Mengeneingaben durch einmaliges, zweimaliges, dreimaliges usw. Drücken zu bewerkstelligen. Diese Taste ist gleichzeitig als Auslösetaste ausgebildet. Zur Durchführung eines Lesevorgangs wird das Datenerfassungsgerät 1 so auf die die abzulesende Datenkarte 4 tragende Trägereinrichtung 6 gesetzt, daß die Unterkante 15 des Gehäuses 2 auf der Querkante 16 der Trägereinrichtung liegt, und die Gehäusekanten 13 und 14 in die Seitenkanten 36 und 37 der Trägereinrichtung 6 eingreifen. Da der mit Lochungen 5 versehene Bereich sich in diesem Ausgangsstadium hinter der Querwand 11 befindet, wird in jedem Fall das Licht sämtlicher Leuchtdioden 29 an der Oberseite der Datenkarte 4 reflektiert und gelangt auf die Fotodioden 30. Das Rierdurch gebildete Signal löst unter Zeitverzögerung die Bewegung des Gleichstrommotors 23 und des damit in Verbindung stehenden Reibrades 17 aus, und zwar so, daß die Datenkarte 4 nach oben gefuhrt wird, bis ihre Unterkante 38 in den Bereich der Querkante 16 der Trägereinrichtung 6 gelangt, wo dann durch ein dem Startsignal entsprechendes Signal die Bewegungsumkehr des Reibrades 17 in die Ausgangsposition ausgelöst wird.

Beim Vorbeifahren der Datenkarte 4 werden deren einzelne Spuren von den Strahlen der Leuchtdioden 29 abgetastet. Die Strahlengänge der einzelnen Leuchtdioden 29 sind längs des Glasstabes 31 durch Schwärzungen 39 voneinander getrennt. Sobald eine Lochung 5 in den Strahlengang gelangt, wird aufgrund der geringen Tiefschärfe der Optik von der entsprechenden Fotodiode 30 kein Licht bzw. kein Licht ausreichender Intensität mehr empfangen, da die durch die Oberfläche der Datenkarte 4 gebildete Reflexionsfläche wegfällt, Diese Änderung des Beleuchtungszustandes wird in ein elektrisches Signal umgewandelt.

Die Lesesignale werden laufend über einen Multiplexer 40 in Verbindung mit einen Zähler 41 der Reihe nach abgefragt und über das Anschlußkabel 3 zur Auswerteelektronik 42 bis 45 übertragen.

In der Auswerteelektronic 42 bis 45 werden die seriell übertragenen analogen Lesesignale über einen Demultiplexer 42 wieder in eine Parellelinformation umgesetzt und den Eingängen einer Speicherschaltung für die Analogsignale 43, einer sogenannten Sample and Hold-Schaltung, zugeführt. Gleichzeitig mit dem Ladevorgang für die Speicherschaltung 43 erfolgt ein Vergleich des zuletzt gespeicherten Signals mit dem neuen Signal über einen Komparator 44. Eine Änderung des Signales nach größer oder kleiner zeigt dabei ein digitales Ausgangssignal am Komparator 44 mit Logikpegel 1 oder 0. Die Komparatorsignale kommen in serieller Folge und werden im Mikroprozessor 45 zur digitelen Parallelinformation, dem Datenbyte zusammengesetzt.

Der Mikroprozessor 45 behandelt die Dateninformationen mit dne in seinem internen Ablaufprogramm festgelegten Regeln und überträgt die aufbereiteten und von Störeinflussen gereinigten Daten zu einer nicht dargestellten Datenspeichereinrichtung oder einem Hauptrechner.

Neben der Signalaufbereitung erzeugt der Mikroprozessor 45 die Taktsignale für die Lesesignalabfrage, Synchronisierimpulse und das Laufsignal für den Motor 23 mit Drehrichtungssteuerung. Außerdem übernimmt der Mikroprozessor 45 die Abfrage der Auslösetaste und kann damit den Lesevorgang auslösen. Eine Anzeige des Betreibszustandes oder eine Fehleranzeige wird vom Mikroprozesor 45 mit der im unmittelbaren Blickfeld liegenden Leuchtdiode 33 der Bedienungsperson mitgeteilt.

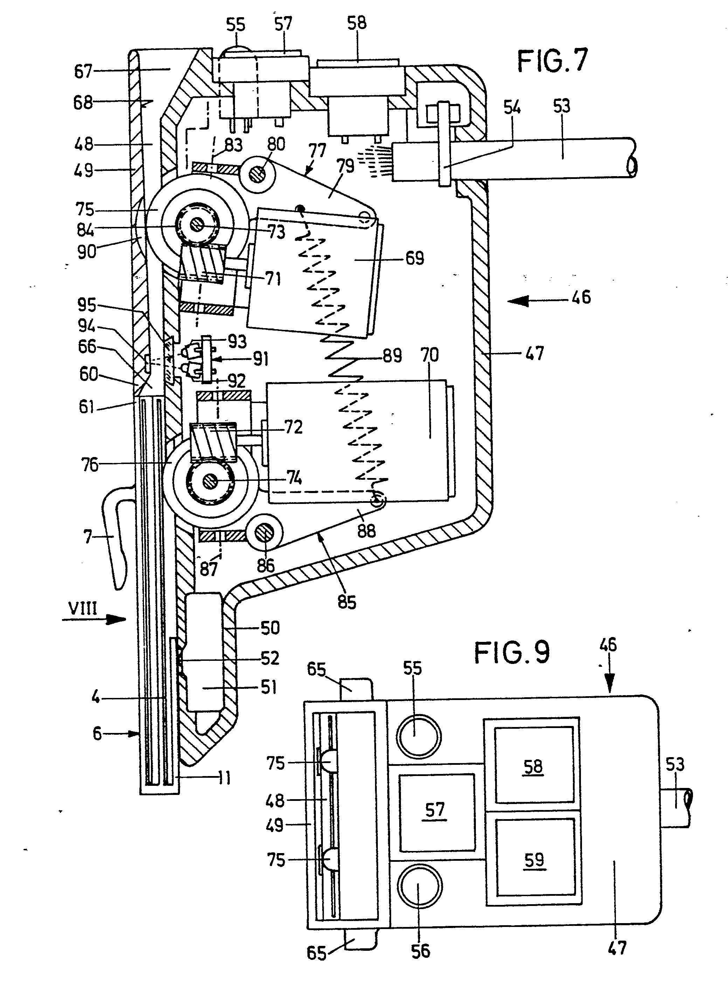

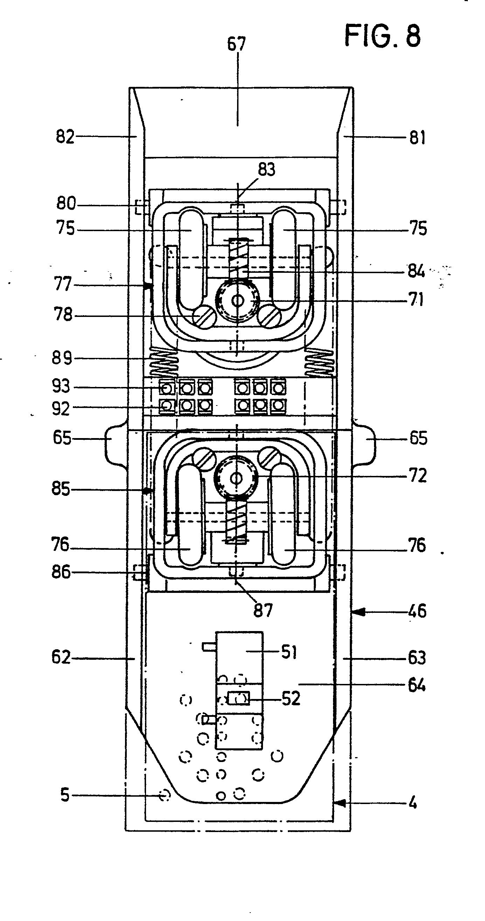

In Fig. 7 bis 8 ist eine zweite Ausführungsform eines erfindungsgemäßen Datenerfassungsgeräts 46 dargestellt, welches auf eine Trägereinrichtung 6 aufgesetzt ist. Dieses Datenerfassungsgerät 46 umfaßt ein Gehäuse 47, an welchem ein Kartenschacht 48 mit einer abnehmbaren vorderen Abdeckung 49 ausgebildet ist. In einem Gehäusebereich 50, welcher im aufgesetzten Zustand an der Trägereinrichtung 6 anliegt, ist ein Mikroschalter 51 angeordnet, welcher einen auf Druck beaufschlagbaren Schaltkontakt 52 aufweist. Dieser Schaltkontakt 52 liegt der Querwand 11 der Trägereinrichtung 6 an. Die elektrische Verdrahtung ist im übringen im einzelnen nicht dargestellt, sondern es ist lediglich ein Verbindungskabel 53 mit Zugentlastung 54 angedeutet. Als elektronische Bauelemente sind weiterhin zwei Kontrolleuchten 55 und 56 und Eingabetasten 57, 58, 59 eingezeichnet. Die Kontrolleuchten können z. B. die ordnungsgemäße Durchführung bzw. Beendigung eines Lesevorgangs anzeigen. Neben darartigen optischen Anzeigevorrichtungen können auch akustische Anzeigevorrichtungen vorgesehen sein, durch welche der Bedienungsperson die ordnungsgemäße Beedigung eines Lesevorgangs angezeigt wird. Die Eingabetasten 57 bis 59 können in Verbindung mit der Logik der nachgeordneten Auswerteeinrichtung mit unterschiedlichen Funktionen belegt werden und beispielsweise als Mengeneingabetasten ausgebildet sein.

Das Gehäuse 47 weist eine durch das untere Ende des Kartenschachtes 48 bzw. dessen Abdeckung 49 bebildete Kante 60 auf, welche als Anschlagkante beim Aufsetzen des Datenerfassungsgerätes 46 dient und auf die Oberkante 61 der Trägereinrichtung 6 aufgesetzt wird. Durch diese Kanten 60 bzw. 61 wird die vertikale Lage des Datenerfassungsgeräts 46 für den durchzuführenden Lesevorgang definiert, während das Gehäuse 47 in denjenigem Bereich, welcher auf der Trägereinrichtung 6 zu liegen kommt, vertikale seitliche Ausschnitte 62, 63 aufweist, so daß der dazwischen gebildete Gehäusebereich 64 in eine korrespondierende Ausnehmung der Trägereinrichtung 6 eingreifen und einrasten kann, so daß auch nicht nur die absolute vertikale Höhe, sondern auch eine seitliche Ausrichtung sichergestellt ist.

Das Heranführen des Gehäuses 47 an diese in Fig. 7 dargestellte Leseposition wird durch seitliche Ansätze 65 erleichtert, welche beim Aufsetzen als Führungen bzw. Anschläge dienen.

Der Kartenschacht 48 weist unten eine trichterartige Erweiterung 66 auf, um das Einziehen der Datenkarten 4 von unten zu erleichtern, Darüber hinaus ist der Kartenschacht 48 auch nach oben offen ausgebildet und weist hier eine nach größere trichterartige Erweiterung 67 auf, welche das manuelle Einführen von Datenkarten 4 gestattet. Die innere Vorderwand 68 der Abdeckung 49 des Kartenschachtes 48 ist von oben nach unteninnen geneigt ausgebildet, um sicherzustellen, daß die Datenkarten 4 beim Rückführen aus dem Kartenschacht 48 in das ihnen zugeordnete vordere Fach der Trägereinrichtung 6 eingeführt werden.

Zum selbsständigen Ausziehen bzwi. Rücksetzen der Datenkarten 4 dienen zwei individuell ansteuerbare Elektromotoren 69, 70, welche über je einen Schneckenantrieb 71, 72 je ein Paar auf einer jeweils gemeinsamen Achse 73, 74 sitzende Reibräder 75, 76 antreiben.

Der Elektromotor 69 ist ebenso wie die Achse 73 des zugehörigen Reibradpaares 75 auf einer Trageanordnung 77 untergebracht und mittels Schrauben 78 befestigt. Der Elektromotor 69 liegt dabei längs eines hebelartigen Ansatzes 79 der Trageanordnung 77. Die Trageanordnung 77 ist um eine Achse 80 schwenkbar gelagert, welche — wie aus Fig. 7 ersichtlich — etwa zwischen dem Schwerpunkt des Elektromotors 69 und der Achse 73 der Reibräder 75 oberhalb der Achse 73 angeordnet ist. Die Achse 80 ist in den Seitenwänden 81, 82 des Gehäuses 47 gelagert.

Die Trageanordnung 77 ist weiterhin über eine etwa vertikale Achse 83 schwenkbar gelagert, so daß für die Reibräder 75 insegesamt eine kardanische Lagerung entsteht, welche einen zuverlässigen Reibkontakt unabhängig von der Winkelstellung der einzuziehenden Datenkarte 4 und von deren Oberflächenausbilden gewährleistet. Auf der Achse 73 der Reibräder 75 sitzt ein Schneckenrad 84, welches durch die Schnecke 71 angetrieben wird.

Der Elektromotor 70 ist über eine entsprechende Trageanordnung 85 um Achsen 86, 87 schwenkbar kardanische gelagert, wobei die Trageanordnung 85 ebenfalls einen hebelartigen Ansatz 88 aufweist.

Die hebelartigen Ansätze 76 bzw. 88 sind über eine Zugfeder 89 miteinander verbunden so daß die Reibradpaare 75 und 76 um die Achsen 80 bzw. 86 schwenkend in Richtung auf die einzuziehende Datenkarte 4 gedrückt werden. Die Abdeckung 49 weist im Bereich der Reibräder 75 eine Ausnehmung 90 auf, um ein freies Durchlaufen der Reibräder 75 zu ermöglichen, wenn keine Datenkarte 4 eingezogen ist.

Zwischen den beiden Reibradpaaren 75 und 76 ist ein Leskopf 91 angeordnet. Der Lesekopf 91 umfaßt eine Reihe von Fototransistoren 92 und Leuchtdioden 93, welche einen derartigen Winkel miteinander einschließen, daß das von einem Spiegel 94 an der Innenwand 68 der Abdeckung 49 reflektierte Licht von den Leuchtdioden in die jeweils darunterleigenden Fototransistoren reflektiert wird. Zur Ausschaltung von Fremdlichteinflüssen und als Staubfilter ist ein Rotfilter 95 vorgesehen.

Das erfindungsgemäße Datenerfassungsgerät arbeitet wie folgt:

Das Gehäuse 47 wird auf eine Trägereinrictung, welche z. B. an einer im einzelnen nicht dargestellten Schublade befestigt ist, aufgesetzt, und zwar so, daß die Kante 60 des Gerätes an der Oberkante 61 der Trägereinrichtung aufliegt, wobei der Gehäusebereich 64 zwischen den Seitenführungen der Trägereinrichtung zu liegen kommt, wobei die Ausschnitte 62, 63 des Gehäuses 46 diesen Seitenführungen dann anliegen und die seitliche Ausrichtung gewährleisten.

Wenn das Gehäuse 46 ordnungsgemäß aufgesetzt ist, wird der Schaltkontakt 52 des Mikroschalters 51 betätigt und hierdurch der Motor 70, welcher die Reibräder 76 antreibt, so in Gang gesetzt, daß die Datenkarte 4 durch die Reibräder 76 nach oben in den Schacht 48 befördert wird.

Sobald die Datenkarte 4 den Lesekopf 91 erreicht und heirdurch die Reflexion in allen Übertragungskänalen zwischen den Leuchtdioden 93 und Fototransistoren 92 unterbrochen wird, wird der obere Elektromotor 69 gestartet und erfaßt die Datenkarte 4, sobald sie in den Bereich der Reibräder 75 gelangt.

Dabei passieren die Lochungen 5 der Datenkarte 4 den Leskopf 91 und es erfolgt eine Ablesung dadurch, daß die Relfexion des von den Leuchtdioden 93 ausgesandten Lichtes über den Spiegel 94 in die Fototransistoren 92 nur dort passieren kann, wo die Datenkarte 4 Lochungen 5 aufweist, während die Oberfläche der Datenkarte 4 selbst bei dieser Anordnung als weniger reflektierend wirkt, so daß dort angebrachte dunkle Aufdrucke den Ablesevorgang nicht beeinträchtigen.

Sobald das Ende der Datenkarte 4 den Lesekopf 91 passiert, ist dies das Signal zur Auslösung der Drehrichtungsumkehr des oberen Motors 69. Der Vorschub des unteren Motors 70 ist in dieser Bewegungsphase durch ein Signal unterbrochen worden, welches das Ende des Lesevorgangs anzeigt, d. h. der Motor wird stromlos gesetzt und kann im Leerlauf weiterdrehen.

Sobald aufgrund der durch die Drehrichtungsumkehr des oberen Motors 69 bewirkten Rückbewegung der Datenkarte 4 wieder sämtliche Kanäle abgedeckt werden, wird der untere Motor wieder in umgekehrte Drehrichtung gestartet, d. h. er unterstützt den Einziehvorgang der Datenkarte 4. Das Abschalten des oberen Motors 69 erfolgt in dieser Phase über ein Zeitglied.

Über die trichterförmige Erweiterung 67 am oberen Ende des Kartenschachtes 48 kann auch eine Handeinlesung vorgenommen werden. Durch die Erweiterung 67 kann die Datenkarte 4 von Hand bequem eingeführt werden, wobei auch heir die Logikeinrichtung tätig wird, indem sie aus der Abfolge der Unterbrechung bzw. Durchlässigkeit der Kanäle des Lesekopfes 91 und aus der Nichtbetätigung des Kontaktes 50 erkennt, daß die Datenkarteneinführung von oben erfolgt. Dementsprechend wird in diesem Fall der obere Motor 69 so gestartet, daß er die Datenkarte 4 nach unten tranportiert. In der entsprechenden zeitlichen Abfolge springt der untere Motor 70 an, kehrt dann um, wobei zum vollständigen Auswerfen der Datenkarte 4 wiederum der obere Motor 69 in Transportrichtung nach oben gestartet wird. Der obere Motor 69 läuft dabei so aus, daß die auszugebende Datenkarte 4 nicht aus denm Kartenschact 48 geschleudert wird, sondern mit ihrere Unterkante auf den zum Stillstand gelangenden Reibrädern 75 zu liegen kommt.

**Patentansprüche**

1. Datenerfassungssystem bestehend aus einem Datenerfassungsgerät (1) mit einem Lesekopf (12, 91) und Trägereinrichtungen zur Aufnahme von Datenkarten, dadurch gekennzeichnet, daß das Datenerfassungsgerät eine Transporteinrichtung mit mindestens einem von einem Elektromotor (23, 69, 70) richtungsumkehrbar angetriebenen Reibrad (17, 75, 76) zur Bewegung der Datenkarte (4) am Lesekopf (12, 91) vorbei umfaßt, daß zur Aufnahme der Daten einer Datenkarte (4) ein Gehäusebereich am Leskopf (12, 91) derart ausgeformt ist, daß dieser beim Aufsetzen auf ein profiliterte Außenseite einer Trägereinrichtung (6) dort in korrespondierende Formtiele eingreift, daß die Trägereinrichtung (6) die Datenkarte (4) herausziehbar aufnimmt, und daß dem Leskopf (12, 91) eine Elektronikanordnung derart nachgeschaltet ist, daß das mindestens eine Reibrad (17, 75, 76) nach dem Aufsetzen selbsttätig vor- und nachfolgend rückwärts in Gang gesetzt und abschließend abgeschaltet wird.

2. Datenerfassungssystem nach Patentanspruch 1, dadurch gekennzeichnet, daß das mindestens eine Reibrad (17, 75, 765) vom Lesekopf (12, 91) weg federbeaufschlagt ist.

3. Datenerfassungssystem nach Patentanspruch 2, dadurch gekennzeichnet, daß oberhalb und unterhalb des Lesekopfes (91) je ein jeweils ein Paar von Reibrädern (75 bzw. 76) antreibender Elektromotor (69 bzw. 70) angeordnet ist.

4. Datenerfassungssystem nach einem der Patentansprüche 1 bis 3, dadurch gekennzeichnet, daß jeder Elektromotor (69, 70) und jedes zugehörige Paar von Reibrädern (75, 76) um eine jeweils bezogen auf die Achse (73 bzw. 74) der Paare von Reibrädern (75 bzw. 76) exzentrisch außen augeordnete Achse (80 bzw. 86) schwenkbar gelagert ist.

5. Datenerfassungssystem nach einem der Patentansprüche 1 bis 4, dadurch gekennzeichnet, daß jedes Paar von Reibrädern (75, 76) und der jeweils zugehörige Elektromotor (69, 70) um eine vertikale, zur Achse (73 bzw. 74) jedes Paares von Reibrädern (75, 76) senkrechte Achse (83 bzw. 87) schwenkbar gelagert ist.

6. Datenerfassungssystem nach einem der Patentansprüche 1 bis 5, dadurch gekennzeichnet, daß an dem zum Ablesen auf die Trägereinrichtung (6) aufzusetzenden Gehäusebereich (50) ein auf Druck einschaltender Kontakt (Mikroschalter 51) angeordnet ist.

7. Datenerfassungssystem nach einem der Patentansprüche 1 bis 6, dadurch gekennzeichnet, daß der Lesekopf als Magnetlesekopf ausgebildet ist.

8. Datenerfassungssystem nach einem der Patentansprüche 1 bis 6, dadurch gekennzeichnet, daß der Lesekopf (12, 91) eine optische Reflexions-Abtasteinrichtung aufweist.

9. Datenerfassungssystem nach einem der Patentansprüche 1 bis 8, dadurch gekennzeichnet, daß das Datenerfassungsgerät einen Kartenschacht (48) aufweist, dessen vorderwand (49) abnehmbar bzw. austauschbar ausgebildet ist.

10. Datenerfassungssystem nach einem der Patentansprüche 1 bis 9, dadurch gekennzeichnet, daß der Kartenschacht (48) an seiner Oberseite eine Einführöffnung (67) für Datenkarten (4) zur manuellen Kartenzuführung aufweist.

## Revendications

1. Système collecteur de données consistent en un appareil collecteur de données (1) muni d'une tête de lecture (12, 91) et de dispositifs de support destinés à recevoir des cartes de données, caractérisé en ce que l'appareil collecteur de données comprend un dispositif de transport muni d'au moins un galet de friction (17, 75, 76) entraîné par un moteur électrique (23, 69, 70) réversible destiné au mouvement de la carte de données (4) devant la tête de lecture (12, 91), en ce que pour la saisie des données d'une carte de données (4), une portion de boîtier sur la tête de lecture (12, 91) est conçue de telle manière que lors du positionnement de celle-ci sur un côté extérieur profilé d'un dispositif de support (6), elle s'y engage dans des parties de forme correspondante, en ce que le dispositif de support (6) reçoit la carte de données (4) de façon amovible, et en ce qu'un dispositif électronique est monté en aval de la tecte de lecture (12, 91) de telle manière qu'au moins un galet de friction (17, 75, 76) après le positionnement se mette en route automatiquement en marche avant et ultérieurement en marche arrière et se mette pour finir automatiquement hors-circuit.

2. Système collecteur de données selon la revendication 1, caractérisé en ce qu'au moins un galet de friction (17, 75, 76) est sollicité par un ressort pour s'écarter de la tête de lecture (12, 91).

3. Système collecteur de données selon la revendication 2, caractérisé en ce qu'au-dessus et en-dessous de la tête de lecture (91) est respectivement disposé un moteur électrique (69 ou 70) entraînant une paire de galets de friction (75 ou 76).

4. Système collecteur de données selon la revendications 1 à 3, caractérisé en ce que chaque moteur électrique (69, 70) et chaque paire associée de galets de friction (75, 76) sont montés de façon pivotante autour d'un axe (80 ou 86) disposé excentriquement vers l'extérieur, respectivement rapporté à l'axe (73, 74) des paires de galets de friction (75, 76).

5. Système collecteur de données selon l'une des revendications 1 à 4, caractérisé en ce que chaque paire de galets de friction (75, 76) et le moteur électrique (69, 70) respectivement associé sont montés de façon pivotante autour d'un axe vertical (83 ou 87) perpendiculaire à l'axe (73, 74) de chaque paire de galets de friction (75, 76).

6. Système collecteur de données selon l'une des revendications 1 à 5, caractérisé en ce que sur la portion de boîtier (50) à positionner pour la lecture sur le dispositif de support (6) est disposé un contact (microrupteur 51) s'eclenchant à la pression.

7. Système collecteur de données selon l'une des revendications 1 à 6, caractérisé en ce que la tête de lecture est conçue en tant que tête de lecture magnétique.

8. Système collecteur de données selon l'une des revendications 1 à 6, caractérisé en ce que la tête de lecture (12, 91) présente un dispositif palpeur à réflexion optique.

9. Système collecteur de données selon l'une des revendications 1 à 8, caractérisé en ce que l'appareil collecteur de données présente une pochette à cartes (48) sont la paroi avant (49) est conçue de façon à pouvoir être enlevée ou remplacée.

10. Système collecteur de données selon l'une des revendications 1 à 9, caractérisé en ce que la pochette de données (48) présente sur son côté supérieur une ouverture d'introduction (67) pour des cartes de données (4) destinée à l'alimentation manuelle des cartes.

**Claims**

1. Data acquisition system, comprising a data acquisition unit (1) with a reading head (12, 91) and carrier means for recording data cards, characterised in that the data acquisition unit comprises a feeder means having at least one friction wheel (17, 75, 76) driven by an electric motor (23, 69, 70) in direction reversible manner for moving the data card (4) past the reading head (12, 91) and in that for recording the data of the data card (4), an area of the housing on the reading head (12, 91) is so shaped that when it is fitted onto a profiled outer face of a carrier means (6), it engages into corresponding shaped parts, and in that the carrier means (6) accommodates the data card (4) in withdrawable fashion and in that an electronic arrangement is so connected downstream of the reading head (12, 91) that after such fitment, at least one friction wheel (17, 75, 76) is automatically set in motion to run forwards and subsequently backwards and is finally switched off.

2. Data acquisition system according to Patent Claim 1, characterised in that the at least one friction wheel (17, 75, 76) is spring biassed away from the reading head (12, 91).

3. Data acquisition system according to Patent Claim 2, characterised in that above and below the reading head (91) there is in each case an electric motor (69, 70) which drives a respective pair of friction wheels (75, 76).

4. Data acquisition system according to one of Patent Claims 1 to 3, characterised in that each electric motor (69, 70) and each associated pair of friction wheels (75, 76) are mounted to pivot about an axis (80, 86) which is eccentrically outwardly disposed in relation to the axis (73, 74) of the pairs of friction wheels (75, 76).

5. Data acquisition system according to one of Patent Claims 1 to 4, characterised in that each pair of friction wheels (75, 76) and whichever is the relevant electric motor (69, 70) are mounted to pivot about a vertical azis (83, 87) at a right angle to the axis (73, 74) of each pair of friction wheels (75, 76).

6. Data acquisition system according to one of Patent Claims 1 to 5, characterised in that on the part of the housing (50) which for reading purposes has to be fitted onto the carrier means (6), there is a contact (micro switch 51) which is switched on when pressure is applied to it.

7. Data acquisition system according to one of Patent Claims 1 to 6, characterised in that the reading head is constructed as a magnetic reading head.

8. Data acquisition system according to one of Patent Claims 1 to 6, characterised in that the reading head (12, 91) comprises an optical reflection scanning means.

9. Data acquisition system according to one of Patent Claims 1 to 8, characterised in that the data acquisition unit comprises a card shaft (48) of which the front wall (49) is removable or interchangeably constructed.

10. Data acquisition system according to one of Patent Claims 1 to 9, characterised in that the card shaft (48) has on its upper face an aperture (67) for the insertion of data cards (4) for manual card feeding.

FIG.1

FIG. 2

FIG. 3

0 092 180

FIG. 5

FIG. 4

FIG.6

FIG.7

FIG.9

FIG. 8